# EUROPÄISCHE PATENTSCHRIFT

(11) **EP 1 962 245 B1**
(45) Veröffentlichungstag und Bekanntmachung des Hinweises auf die Patenterteilung: **10.10.2012**
(21) Anmeldenummer: 08101813.7
(22) Anmeldetag: 20.02.2008
(51) Int. Cl.: G06T 7/20

(54) **Verfahren und Vorrichtung zum Ermitteln des Bewegungszustands von Objekten**
Method and device for detecting the movement state of objects
Procédé et dispositif de détermination de l'état de déplacement d'objets

(30) Priorität: 21.02.2007 DE 102007008543
(43) Veröffentlichungstag der Anmeldung: 27.08.2008
(73) Patentinhaber: Hella KGaA Hueck & Co., 59552 Lippstadt (DE)
(72) Erfinder: Hoffmann, Ingo, 10437 Berlin (DE); Klebanov, Boris, 13509 Berlin (DE)
(74) Vertreter: Schaumburg, Thoenes, Thurn, Landskron, Eckert

(56) Entgegenhaltungen:
- EP-A- 0 691 534
- US-A- 5 739 848
- US-A1- 2005 100 192
- BURSCHKA D ET AL: "Vision-Based 3D Scene Analysis for Driver Assistance" ROBOTICS AND AUTOMATION, 2005. PROCEEDINGS OF THE 2005 IEEE INTERNATIONAL CONFERENCE ON BARCELONA, SPAIN 18-22 APRIL 2005, PISCATAWAY, NJ, USA,IEEE, 18. April 2005 (2005-04-18), Seiten 812-818, XP010872241 ISBN: 978-0-7803-8914-4

## Beschreibung

Die Erfindung betrifft ein Verfahren und eine Vorrichtung zum Ermitteln des Bewegungszustandes von Objekten, bei dem mit Hilfe einer Kamera mehrere Bilder mit Abbildung mindestens eines Objekts nacheinander als Bildfolge erfasst werden.

Aus dem Dokument DE 10 2004 063 836 A1 ist bekannt, mit einer im Bereich des Innenspiegels eines Kraftfahrzeugs angeordneten Kamera Bilder aufzunehmen, mit deren Hilfe das Verkehrsgeschehen vor dem Fahrzeug analysiert wird. Abhängig vom analysierten Verkehrsgeschehen wird die Reichweite des Abblendlichtscheinwerfers des Kraftfahrzeugs eingestellt. Die Reichweite des Abblendlichts kann je nach Aufbau des Scheinwerfers mit Hilfe einer Leuchtweitenregulierung, mit Hilfe einer in verschiedenen Blendenstellungen drehbaren Blendenwelle, durch die gleitende Absenkung einer Blende, durch eine Leistungsänderung einer oder mehrerer Lichtquellen sowie durch Zuschalten einer oder mehrerer Lichtquellen erfolgen.

Aus dem Dokument EP 0 971 829 B1 ist ein Steuerungssystem zum automatischen Dimmen von Fahrzeugscheinwerfern bekannt, das ein optisches System und ein Bildverarbeitungssystem umfasst. Das optische System ist dabei in der Lage, zwischen Scheinwerfern und Rücklichtern zu unterscheiden, wobei die Lichtstrahlen von den Scheinwerfern und von den Rücklichtern auf unterschiedliche Bereiche eines Sensor-Pixel-Arrays fokussiert werden.

Aus dem Dokument WO 2006/069978 A2 ist bekannt, eine Objekteigenschaft eines Objekts mit Hilfe von Bildern einer Kamera zu bestimmen. Ferner ist aus diesem Dokument bekannt, mit Hilfe einer Stereokamera die Position eines Objekts zu bestimmen.

Aus dem Dokument "Vision-Based 3D Scene Analysis for Driver Assistance", XP 010872241, ISBN 978-0-7803-8914-4, ist ein System bekannt, das ausgehend von Bildern einer im Fahrzeug hinter dem Rückspiegel montierten Kamera die Position eines Verkehrszeichens in mehreren nacheinander aufgenommenen Bildern ermittelt und die Bewegung der Kamera schätzt. Dabei wird von ortsunveränderlichen Objekten (Natural Landmarks) ausgegangen, um die Lageänderung der Kamera zwischen den Bildpositionen des Objekts in mehreren Bildern zu berechnen. Ausgehend davon wird dann eine 3D-Position eines Verkehrszeichens bestimmt.

Aus dem Dokument US 5,739,848 ist ein System zur Trackingerkennung von ortsfesten Objekten, wie Verkehrszeichen und Fahrbahnmarkierungen, bekannt. Dabei wird die Position eines speziellen Punkts der Fahrbahn bestimmt. Ausgehend von dieser Position und der Position desselben Objekts zu einem späteren Zeitpunkt wird die Entfernung zwischen den Objekten und somit die Bewegung der Kamera des Fahrzeugs bestimmt. Auch bei dem aus dem Dokument US 5,739,848 bekannten System wird somit ein ortsunveränderliches Objekt genutzt, um die Bewegung der Kamera bzw. des Fahrzeugs zu ermitteln.

Aus dem Dokument EP 0 691 534 ist ein Verfahren zur Ermittlung der Sichtweite bekannt, bei dem mit Hilfe einer im Fahrzeug angeordneten Kamera Bilder aufgenommen und Orte mit definierten Helligkeitsänderungen in den Bildern ermittelt werden ausgehend von den so ermittelten Orten werden Entfernungswerte und mit Hilfe dieser Entfernungswerte die Sichtweite des Fahrzeugführers ermittelt.

Zur Analyse des Verkehrsgeschehens im Umfeld eines Fahrzeugs ist es erforderlich, Eigenschaften von Objekten zu ermitteln, die mit Hilfe einer im oder am Fahrzeug angeordneten Sensoranordnung, insbesondere einer Kamera, erfasst werden können. Dabei ist es wünschenswert, solche Objekteigenschaften mit Hilfe einer einfach aufgebauten Monokamera zu erfassen, sodass auf ein relativ aufwendiges Stereokamerasystem verzichtet werden kann oder sodass die Objekteigenschaften des Objekts zusätzlich oder alternativ zum Stereokamerasystem mit Hilfe der Monokamera erfasst werden können. Insbesondere die Bildverarbeitung ist bei einzelnen mit Hilfe einer Monokamera aufgenommenen Bildern einfacher als bei den mit Hilfe einer Stereokamera paarweise aufgenommenen Stereobildern. Ferner ist das exakte Kalibrieren eines Stereokamerasystems relativ aufwendig.

Aufgabe der Erfindung ist es, ein Verfahren und eine Vorrichtung anzugeben, durch die der Bewegungszustand von Objekten auf einfache Art und Weise ermittelt werden kann.

Diese Aufgabe wird durch ein Verfahren mit den Merkmalen des Patentanspruchs 1 und durch eine Vorrichtung mit den Merkmalen des Patentan-spruchs 8 gelöst. Vorteilhafte Weiterbildungen der Erfindung sind in den abhängigen Patentansprüchen angegeben.

Die mit Hilfe einer Kamera aufgenommenen Bilder mit Abbildungen eines Objekts werden genutzt, um die Position des Objekts mindestens zweimal zu bestimmen. Dabei wird die Kamera zwischen den Aufnahmezeitpunkten von jeweils zwei zur Bestimmung der Position des Objekts ermittelten Bildern bewegt. Die Bewegung der Kamera zwischen den Aufnahmezeitpunkten dieser Bilder wird erfasst. Es wird überprüft, ob die ermittelten Positionen des Objekts plausibel sind und ob die ermittelten Positionen übereinstimmen. Sind die Positionen plausibel und stimmen diese Positionen überein, kann davon ausgegangen werden, dass das Objekt ein ortsfestes Objekt ist. Dem Objekt wird zumindest so lange der Bewegungszustand "ortsfest" bzw. "unbewegt" als Eigenschaft zugewiesen, bis für das Objekt der Bewegungszustand "bewegt" ermittelt worden ist. Die für dieses Verfahren erforderlichen Bilder können insbesondere mit einer einfach aufgebauten und kostengünstigen Monokamera aufgenommen werden, die zu einem Aufnahmezeitpunkt nur ein Bild mit einer Abbildung des Objekts oder mehrerer Objekte aufnimmt. Der Bewegungszustand des Objekts kann zusammen mit weiteren ermittelten Objekteigenschaften des Objekts zur Klassifikation des Objekts herangezogen werden. Ortsfeste Objekte können beispielsweise stehende Fahrzeuge, Leitpfosten, ortsfeste Beleuchtungen, wie z. B. Straßenbeleuchtungen, Lichtsignalanlagen, beleuchtete Gebäude und Einrichtungen, beleuchtete Werbetafeln, usw. sein. Der ermittelte Bewegungszustand wird zur Klassifikation des Objekts als Analyseergebnis vorzugsweise zusammen mit den Analyseergebnissen weiterer Analysen durch ein Bewertungsverfahren bewertet.

Durch eine Vorrichtung zum Ermitteln des Bewegungszustandes von Objekten mit den Merkmalen des Patentanspruchs 8 können die gleichen Vorteile erzielt werden wie durch das Verfahren nach Patentanspruch 1.

Ferner kann diese Vorrichtung auf die gleiche Weise weitergebildet werden wie für das Verfahren angegeben.

Weitere Merkmale und Vorteile der Erfindung ergeben sich aus der nachfolgenden Beschreibung, welche in Verbindung mit den beigefügten Zeichnungen die Erfindung anhand von Ausführungsbeispielen erläutert.

Es zeigen:
- Figur 1: eine Verkehrssituation, bei der die Position eines Objekts sowie mehrere Positionen einer mit einem Fahrzeug bewegten Kamera dargestellt sind;
- Figur 2: eine Verkehrssituation, bei der die Positionen der mit dem Fahrzeug bewegten Kamera in gleicher Weise wie in Figur 1 sowie die Positionen eines das Fahrzeug überholenden weiteren Fahrzeugs dargestellt sind;
- Figur 3: eine Verkehrssituation, bei der die Positionen der mit dem Fahrzeug bewegten Kamera in gleicher Weise wie in Figur 1 sowie die Positionen eines mit etwa gleicher Geschwindigkeit wie das Fahrzeug in Fahrtrichtung und zusätzlich lateral zum Fahrzeug bewegten weiteren Fahrzeugs dargestellt sind; und
- Figur 4: eine Verkehrssituation, bei der die Positionen der mit dem Fahrzeug bewegten Kamera in gleicher Weise wie in Figur 1 sowie die Positionen eines vom Fahrzeug überholten weiteren Fahrzeugs dargestellt sind.

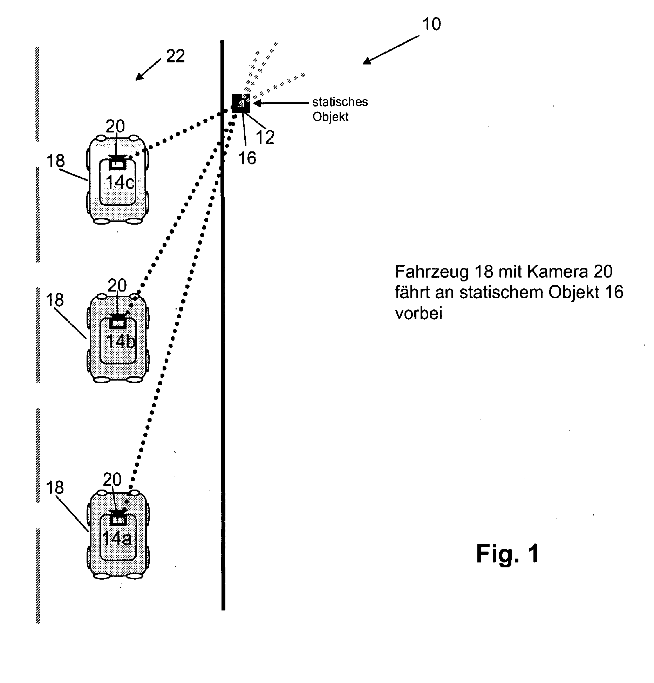

In Figur 1 ist eine Verkehrssituation 10 gezeigt, bei der sowohl die Position 12 eines Objekts 16 als auch die Positionen 14a bis 14c einer in einem Kraftfahrzeug 18 angeordneten Monokamera 20 dargestellt sind. Die Kamera 50 wird durch das Fahrzeug 18 parallel zur Fahrbahn 22 bewegt, an deren rechtem Rand das Objekt 16 angeordnet ist.

Das Fahrzeug 18 mit der Kamera 20 bewegt sich entlang des rechten Fahrstreifens der Fahrbahn 22, wobei mit Hilfe der Kamera 20 an jeder Position 14a bis 14c des Fahrzeugs 18 ein Bild mit der Abbildung des Objekts 16 als Bildfolge aufgenommen wird. Mit Hilfe von jeweils zwei der an diesen Positionen 14a bis 14c aufgenommenen Bildern kann eine Position 12 des Objekts 16 bestimmt werden. Dazu wird in jedem der zur Positionsbestimmung des Objekts 16 genutzten Bildern die Lage, d. h. die Bildkoordinaten der Abbildung des Objekts 16 im aufgenommenen Bild ermittelt und jeweils der Winkel der in Figur 1 dargestellten Sichtlinien zum Objekt 16 bestimmt. Als Sichtlinie wird dabei eine Gerade angesehen, die das Objekt und zumindest ein optisches Element der Kamera 20 zur Abbildung des Objektlaufs einer Bildaufnahmefläche der Kamera 20 schneidet.

Mit Hilfe der ermittelten Winkel der Sichtlinien zwischen Kamera 20 und Objekt 16 zum jeweiligen Aufnahmezeitpunkt in zwei Bildern und der durch die Kamera 20 bzw. durch das Fahrzeug 18 zwischen den Aufnahmezeitpunkten dieser zwei Bilder zurückgelegten Strecke kann die Position 12 des Objekts 16 bestimmt werden. Diese Position 12 stimmt mit der tatsächlichen Position 12 des Objekts 16 überein, wenn das Objekt 16 ein ortsfestes unbewegtes Objekt ist.

Wird diese Positionsbestimmung der Position 12 des Objekts 16 mindestens zwei Mal mit verschiedenen Bildpaaren durchgeführt, so werden bei der ersten Positionsbestimmung eine erste Position 12 und bei der zweiten Positionsbestimmung eine zweite Position 12 bestimmt. Diese Positionsbestimmung kann beispielsweise mit Hilfe eines Trackingverfahrens durchgeführt werden, das für statische Objekte parametrisiert ist.

Ferner wird überprüft, ob die ermittelten Positionen des Objekts 16 plausibel sind und übereinstimmen. Ist das der Fall, so ist das Objekt 16 zumindest für den Zeitraum zwischen den Bildaufnahmen der zur Positionsbestimmung genutzten Bilder ein ortsfestes Objekt 16, da es sich gemäß den Positionsbestimmungen zwischen diesen Bildaufnahmen nicht bewegt hat und die Relativbewegung zwischen der Kamera 20 und dem Objekt 16 mit der Bewegung der Kamera 20 bzw. des Fahrzeugs 18 übereinstimmt.

Somit wird bei dieser Vorgehensweise von der Hypothese ausgegangen, dass es sich bei dem Objekt 16 an der Position 12 um ein ortsfestes Objekt 16 handelt. Diese Hypothese wird durch die ermittelten übereinstimmenden und plausiblen Positionen 12 bestätigt oder durch verschiedene und/oder unplausible ermittelte Positionen widerlegt. Dabei können Abweichungen in einem Fehlertoleranzbereich ignoriert werden, die zu geringfügig abweichenden Positionen 12 des Objekts 16 in einem Fehlertoleranzbereich führen.

Die Überprüfung, ob die ermittelte Position plausibel ist, kann insbesondere durch die Position der Abbildung des Objekts in einem oder mehreren aufgenommenen Bildern überprüft werden. Insbesondere dann, wenn die ermittelte Position 12 des Objekts gar nicht im Erfassungsbereich der Kamera 20 liegt oder nicht an einer solchen Bildkoordinate des erfassten Bildes, an der sich die Abbildung auf Grund der ermittelten Position 12 befinden müsste, ist die ermittelte Position 12 des Objekts 16 unplausibel. Das Objekt 12, dessen Objekteigenschaft "bewegt" oder "unbewegt" bzw. "bewegt" oder "ortsfest" mit Hilfe der beschriebenen Vorgehensweise ermittelt worden ist, ist bei der Verkehrssituation 10 nach Figur 1 ein ortsfestes Objekt 16, nämlich ein Leitpfosten zur seitlichen Begrenzung der Fahrbahn 22.

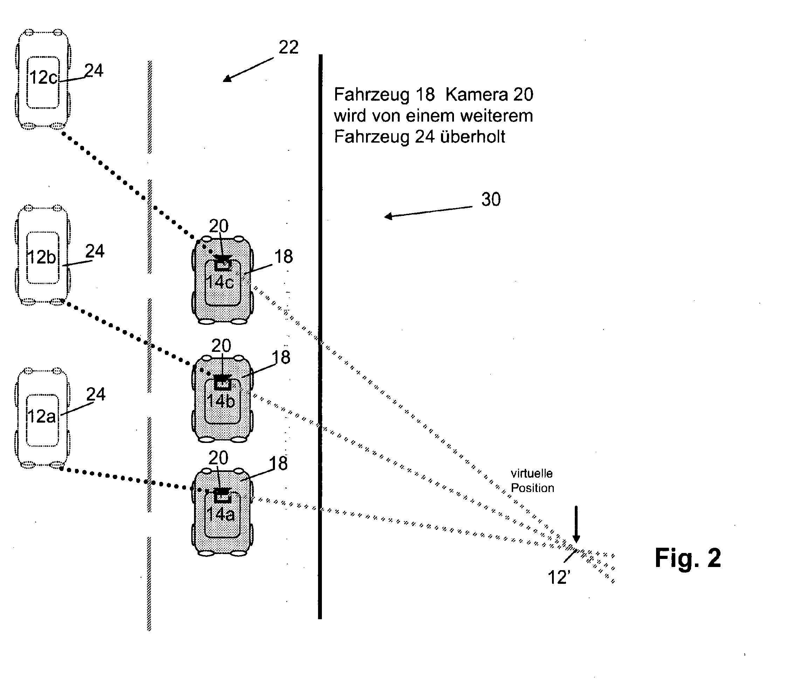

In Figur 2 ist eine Verkehrssituation 30 ähnlich der Verkehrssituation 10 nach Figur 1 dargestellt. Gleiche Elemente haben dieselben Bezugszeichen. In gleicher Weise wie bei der Verkehrssituation 10 nach Figur 1 wird die Kamera 20 auch bei der in Figur 2 dargestellten Verkehrssituation 30 mit dem Fahrzeug 18 nacheinander von der Position 14a über die Position 14b zur Position 14c bewegt. Mit Hilfe der Kamera wird an jeder dargestellten Position 14a bis 14c ein Bild des Objekts 24 aufgenommen, dessen Bewegungszustand ermittelt werden soll. Das Objekt ist ein Fahrzeug 24, das sich auf einer parallelen Achse zum Fahrzeug 16 bzw. zur Kamera 20 mit einer höheren Geschwindigkeit bewegt. Wie durch die dargestellten Sichtlinien zwischen Kamera 20 und dem weiteren Fahrzeug 24 in Figur 2 gezeigt, befindet sich das Fahrzeug 24 zum Zeitpunkt, zu dem sich die Kamera 20 an der Position 14a befindet, an der Position 12a, zum Zeitpunkt, zu dem sich die Kamera 20 an der Position 14b befindet, an der Position 12b und zum Zeitpunkt, zu dem sich die Kamera 20 an der Position 14c befindet, an der Position 12c.

Für die mit Hilfe der an den Positionen 14a bis 14c durch die Kamera 20 aufgenommenen Bilder des weiteren Fahrzeugs 24 ergibt sich durch die Verarbeitung dieser Bilder zur Positionsbestimmung der Position des weiteren Fahrzeugs 24 im Schnittpunkt der verlängerten Sichtlinien zwischen Kamera 20 und dem weiteren Fahrzeug 24 eine virtuelle Position 12' des weiteren Fahrzeugs 24. Eine solche virtuelle Position 12' ist unplausibel, da diese Position 12' nicht im Erfassungsbereich der Kamera liegt. Somit kann für das Objekt keine plausible Position ermittelt werden. Das betrachtete Objekt ist somit kein ortsfestes unbewegtes Objekt sondern ein bewegtes Objekt, da es sich bei den tatsächlichen Objekten um ein das Fahrzeug 18 überholendes weiteres Fahrzeug 24 handelt.

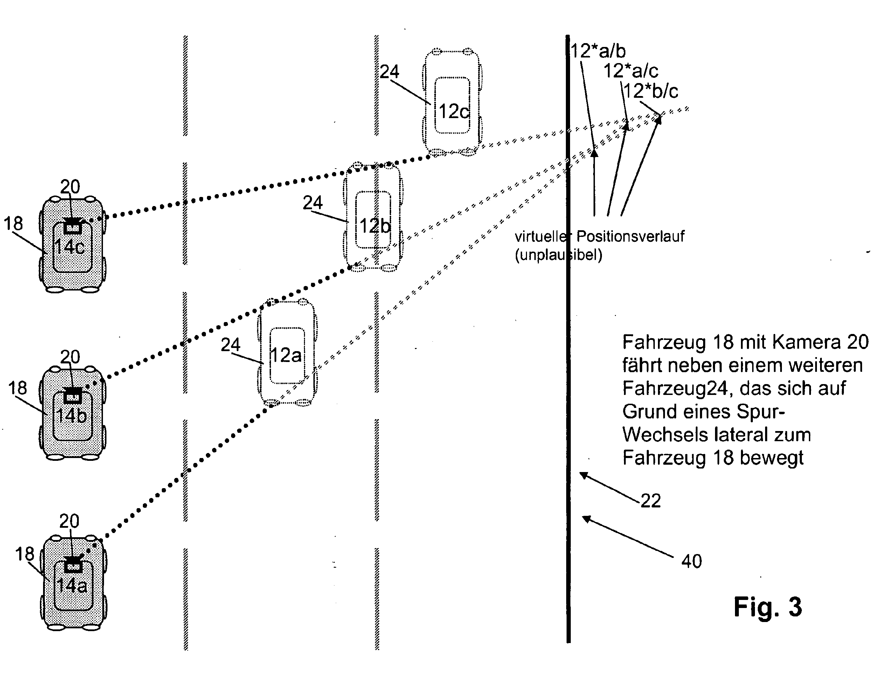

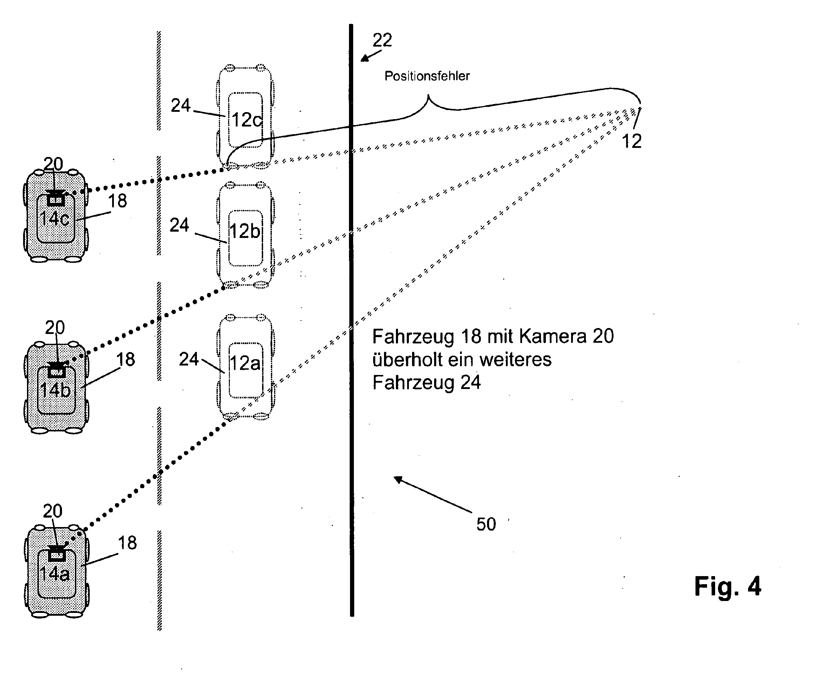

In Figur 3 ist eine Verkehrssituation 40 ähnlich der Verkehrssituation 20 nach Figur 2 dargestellt. In gleicher Weise wie bei den Verkehrssituationen 10 und 50 wird die Kamera 20 auch bei der in Figur 4 dargestellten Verkehrssituation 40 zusammen mit dem Fahrzeug 18 bewegt. Die Fahrzeuge 18, 24 bewegen sich in Richtung der Fahrbahn 22 auf unterschiedlichen Fahrspuren in dieselbe Fahrtrichtung, wobei sich das Fahrzeug 18 auf der linken Fahrspur bewegt und das Fahrzeug 24 die Fahrspur von der mittleren Fahrspur auf die rechte Fahrspur wechselt. Das Fahrzeug 24 bewegt sich während des Zeitraums, in dem die Kamera 20 mit dem Fahrzeug 18 von der Position 14a bis zur Position 14c bewegt wird, zu den entsprechenden Positionen 12a bis 12c. Ausgehend von jeweils zwei an den Positionen 14a bis 14c mit Hilfe der Kamera aufgenommenen Bildern mit Abbildungen des Fahrzeugs 24 ergeben sich mehrere unplausible Positionen 12*a/b, 12*a/c, 12*b/c. Ein ähnlicher unplausibler Positionsverlauf der Positionen 12a/b, 12a/c, 12b/c oder anderer unplausibler Positionen ergibt sich bei einer ungleichmäßigen Bewegung der Kamera 20 und einer gleichmäßigen Bewegung des Fahrzeugs 24 bzw. des Objekts oder bei einer gleichmäßigen Bewegung der Kamera 20 und einer ungleichmäßigen Bewegung des Fahrzeugs 24 bzw. des Objekts auf parallelen Geraden, sowie bei voneinander verschiedenen ungleichmäßigen Bewegungen des Fahrzeugs 24 bzw. des Objekts und der Kamera 20.

In Figur 4 ist eine Verkehrssituation 50 ähnlich den Verkehrssituationen 30 und 40 dargestellt. In gleicher Weise, wie bei diesen Verkehrssituationen 30, 40 beschrieben, wird die Kamera 20 bei der Verkehrssituation 50 zusammen mit dem Fahrzeug 18 bewegt. Die Fahrzeuge 18, 24 bewegen sich auf parallelen Fahrspuren, wobei sich das Fahrzeug 18 schneller als das Fahrzeug 24 bewegt, sodass das Fahrzeug 18 das Fahrzeug 24 überholt. Das Fahrzeug 24 befindet sich zu dem Zeitpunkt, zu dem sich die Kamera 20 / Fahrzeug 18 an der mit dem jeweiligen kleinen Buchstaben gekennzeichneten Position 14 befindet in gleicher Weise wie in den Diagrammen 20, 30, 40 an der mit demselben Kleinbuchstaben gekennzeichneten Position 12. Vorzugsweise werden sowohl das Fahrzeug 24 als auch die Kamera 20 zwischen den Positionen 12a bis 12c bzw. 14a bis 14c gleichmäßig bewegt. Bei der Positionsbestimmung wird für das Fahrzeug die Position 12' ermittelt, sodass mit Hilfe der Vorgehensweise nicht zwischen den Positionen 12a und 12c bewegten Objekts und einem an der Position 12' angeordneten unbewegten ortsfesten Objekt unterschieden werden kann. Nur in diesem in Figur 4 dargestellten Fall würde die Hypothese, dass es sich beim Fahrzeug 24 um ein ortsfestes Objekt handelt, bestätigt werden, obwohl es sich bei dem Fahrzeug 24 tatsächlich um ein mit gegenüber der Kamera 20 geringerer Geschwindigkeit bewegtes Fahrzeug handelt. Jedoch tritt eine solche gleichartige Bewegung der Kamera 20 und des Fahrzeugs 24 in der Praxis nicht oder nur sehr selten auf, sodass die vorgeschlagene Vorgehensweise zum Erfassen der Objekteigenschaften von Objekten im Verkehrsraum vor dem Fahrzeug 18, in dem die Kamera 20 angeordnet ist, für viele Anwendungen ausreichend ist. Insbesondere kann die Bewertung, ob es sich beim Objekt um ein ortsfestes Objekt 16 oder ein bewegtes Objekt 24 handelt, als ein Analyseergebnis ausgegeben und weiterverarbeitet werden, durch das zusammen mit weiteren Analyseergebnissen in einem Bewertungsverfahren unter zu Hilfenahme von Modellwissen das mit Hilfe der Kamera 20 erfasste Objekt 16/24 klassifiziert werden kann. Bei der Klassifizierung kann insbesondere ermittelt werden, ob es sich bei dem Objekt um ein bewegtes Fahrzeug 24 und somit um einen relevanten Verkehrsteilnehmer handelt. Mit Hilfe dieser Information kann von einer Steuerung automatisch eine Entscheidung darüber getroffen werden, ob ein mit Hilfe der Scheinwerfer des Fahrzeugs 18 ausgeleuchteter Bereich vor dem Fahrzeug 18 in bzw. an dem die Kamera 20 angeordnet ist, vergrößert werden kann, ohne andere Verkehrsteilnehmer zu behindern, oder ob dieser Bereich verringert werden muss, um eine Behinderung anderer Fahrzeugführer zu vermeiden oder zu beseitigen.

Die Positionsbestimmung der Kamera an den Positionen 14a bis 14c bzw. die zwischen den einzelnen Positionen 14a bis 14c zurückgelegten Stecken können insbesondere mit Hilfe eines Navigationssystems und/oder durch den erfassten Bewegungsverlauf des Fahrzeugs 18 erfasst werden, in dem die Kamera 20 angeordnet ist. Die Kamera 20 ist dabei vorzugsweise hinter der Windschutzscheibe in der Nähe des Innenspiegels des Fahrzeugs 18 angeordnet.

## Patentansprüche

1. Verfahren zum Ermitteln des Bewegungszustandes eines Objekts,
bei dem mit Hilfe einer mit einem Fahrzeug (18) verbundenen Kamera (20) mehrere Bilder mit Abbildungen mindestens eines Objekts (16, 24) nacheinander als Bildfolge erfasst werden; wobei die Kamera (20) eine Monokamera oder eine einzelne Kamera eines Stereokamerasystems ist,
zur Bestimmung der Position (12, 12', 12*) des Objekts (16, 24) jeweils eine Bildposition der Abbildung des Objekts (16, 24) in zumindest einem Teil der Bilder ermittelt wird, wobei die Bewegung (14a bis 14c) der Kamera (20) zwischen den Aufnahmezeitpunkten von jeweils zwei zur Bestimmung der Position (12, 12', 12*) des Objekts (16, 24) ermittelten Bildern mit hilfe zugefüther information erfasst wird,
eine erste Bestimmung der Position (12, 12', 12*) des Objekts (16, 24) mit Hilfe der in zwei Bildern ermittelten Bildpositionen der abbildung des Objekts (16, 24) und der Bewegung (14a bis 14c) der Kamera (20) zwischen den Aufnahmezeitpunkten der zwei Bilder durchgeführt wird,
mindestens eine zweite Bestimmung der Position (12, 12') des Objekts (16, 24) mit Hilfe der in zwei weiteren Bildern ermittelten Bildpositionen der Abbildung des Objekts (16, 24) und der Bewegung (14a bis 14c) der Kamera (20) zwischen den Aufnahmezeitpunkten der zwei weiteren Bilder durchgeführt wird, wobei zumindest ein zur ersten Bestimmung der Position (12, 12', 12*) des Objekts (16, 24) verwendetes Bild von den zur zweiten Bestimmung der Position (12, 12', 12*) des Objekts (16, 24) verwendeten Bilder verschieden ist,
und bei dem überprüft wird, ob die ermittelte erste Position (12, 12', 12*) und die ermittelte zweite Position (12, 12', 12*) des Objekts (16, 24) plausibel sind und übereinstimmen,
wobei die Überprüfung, ob eine ermittelte Position plausibel ist, durch eine Überprüfung der Position der Abbildung des Objekts in einem oder mehreren Bildern erfolgt,
wobei die Position des Objekts unplausibel ist, wenn die ermittelte Position des Objekts nicht im Erfassungsbereich der Kamera liegt oder die Abbildung des objekts nicht an einer solchen Bildkoordinate des erfassten Bildes, an der sich die Abbildung auf Grund der ermittelten Position befinden müsste,
wobei dem Objekt (16) der Bewegungszustand unbewegt zugewiesen wird, wenn die ermittelten Positionen (12, 12', 12*) plausibel sind und übereinstimmen, und
wobei dem Objekt (24) der Bewegungszustand bewegt zugewiesen wird, wenn die ermittelten Positionen (12, 12', 12*) unplausibel sind und/oder die ermittelten Positionen (12, 12', 12*) nicht übereinstimmen.

2. Verfahren nach Anspruch 1, **dadurch gekennzeichnet, dass** bei plausiblen ermittelten Positionen (12, 12') und bei einer Übereinstimmung der ermittelten ersten und der ermittelten zweiten Position (12, 12') des Objekts die Bewegung (14a bis 14c) der Kamera (20) mit der Relativbewegung zwischen Kamera (20) und Objekt (16) übereinstimmt, wobei das Objekt (16) unbewegt bzw. ortsfest ist,
und dass bei unplausiblen ermittelten Positionen (12, 12', 12*) und/oder bei unterschiedlichen ermittelten ersten und zweiten Positionen (12, 12', 12*) des Objekts (24) die Bewegung (14a bis 14c) der Kamera (20) nicht mit der Relativbewegung zwischen Kamera (20) und Objekt (24) übereinstimmt, wobei das Objekt (24) bewegt bzw. nicht ortsfest ist.

3. Verfahren nach einem der vorhergehenden Ansprüche, **dadurch gekennzeichnet, dass** die Bewegung (14a bis 14c) der Kamera (20) im Raum, vorzugsweise in einer Ebene, ermittelt wird.

4. Verfahren nach einem der vorhergehenden Ansprüche, **dadurch gekennzeichnet, dass** das Objekt (16, 24) als ortsfest angenommen wird, und dass die Bewegung (14a bis 14c) der Kamera (20) mit Hilfe einer Positionsbestimmung durch ein Navigationssystem und/oder durch den erfassten Bewegungsverlauf eines Fahrzeugs (18), mit dem die Kamera (20) verbunden ist, erfasst wird.

5. Verfahren nach Anspruch 4, **dadurch gekennzeichnet, dass** überprüft wird, ob die Annahme, dass das Objekt (16, 24) ortsfest ist, durch eine Positionsbestimmung der Position (12, 12') des Objekts (16, 24) verifiziert wird, wobei das Objekt (16, 24) als ortsfestes Objekt (16) bestimmt wird, wenn die mit Hilfe der mindestens zwei durchgeführten Bestimmungen ermittelten Positionen (12, 12') des Objekts (16) plausibel sind und übereinstimmen, und wobei das Objekt (16, 24) als bewegtes Objekt (24) bestimmt wird, wenn mit Hilfe der mindestens zwei durchgeführten Bestimmungen ermittelten Positionen (12, 12') des Objekts (24) nicht übereinstimmen und/oder unplausibel sind.

6. Verfahren nach einem der vorhergehenden Ansprüche, **dadurch gekennzeichnet, dass** zumindest bei dem Erfassen eines Teils der Bilder der Bildfolge eine Gerade zwischen dem Schnittpunkt der optischen Achse der Kamera (20) mit der Bildaufnahmefläche und dem Objekt (16, 24) nicht mit der optischen Achse der Kamera (20) übereinstimmt.

7. Verfahren nach Anspruch 6, **dadurch gekennzeichnet, dass** die Gerade die optische Achse der Kamera (20) beim Erfassen der Bilder jeweils in einem Winkel schneidet.

8. Vorrichtung zum Ermitteln des Bewegungszustandes eines Objekts,
mit einer mit einem Fahrzeug (18) verbundenen Kamera (20) zum Erfassen mehrere Bilder mit Abbildungen mindestens eines Objekts (16, 24) nacheinander als Bildfolge; wobei die Kamera (20) eine Monokamera oder eine einzelne Kamera eines Stereokamerasystems ist,
mit einer Datenverarbeitungseinheit zur Bildverarbeitung von aufgenommenen Bildern,
wobei die Datenverarbeitungseinheit zur Bestimmung der Position (12, 12') des Objekts (16, 24) jeweils eine Bildposition der Abbildung des Objekts (16, 24) in zumindest einem Teil der Bilder ermittelt,
wobei die Datenverarbeitungseinheit die Bewegung (14a bis 14c) der Kamera (20) zwischen den Aufhahmezeitpunkten von jeweils zwei zur Bestimmung der Position (12, 12') des Objekts(16, 24) erfassten Bildern mit Hilfe zugeführter Informationen erfasst,
wobei die Datenverarbeitungseinheit eine erste Bestimmung der Position (12, 12') des Objekts (16, 24) mit Hilfe der in zwei Bildern ermittelten Bildpositionen der Abbildung des Objekts (16, 24) und der Bewegung (14a bis 14c) der Kamera (20) zwischen den Aufnahmezeitpunkten der zwei Bilder durchführt,
wobei die Datenverarbeitungseinheit mindestens eine zweite Bestimmung der Position (12, 12') des Objekts (16, 24) mit Hilfe der in zwei weiteren Bildern ermittelten Bildpositionen des Abbildung des Objekts (16, 24) und der Bewegung (14a bis 14c) der Kamera (20) zwischen den Aufnahmezeitpunkten der zwei weiteren Bilder durchführt, wobei zumindest ein zur ersten Bestimmung der Position (12, 12') des Objekts (16, 24) verwendetes Bild von den zur zweiten Bestimmung der Position (12, 12') des Objekts (16, 24) verwendeten Bildern verschieden ist,
wobei die Datenverarbeitungseinheit überprüft, ob die ermittelte erste Position (12, 12') und die ermittelte zweite Position (12, 12') des Objekts (16, 24) plausibel sind und übereinstimmen,
wobei die Überprüfung, ob eine ermittelte Position plausibel ist, durch eine Überprüfung der Position der Abbildung des Objekts in einem oder mehreren Bildern erfolgt,
wobei die Position des Objekts unplausibel ist, wenn die ermittelte Position des Objekts nicht im Erfassungsbereich der Kamera liegt oder die Abbildung des objekts nicht an einer solchen Bildkoordinate des erfassten Bildes, an der sich die Abbildung auf Grund der ermittelten Position befinden müsste,
wobei die Datenverarbeitungseinheit dem Objekt (16) den Bewegungszustand unbewegt zuweist, wenn die ermittelten Positionen (12, 12', 12*) nicht übereinstimmen, und
wobei die Datenverarbeitungseinheit dem Objekt (24) den Bewegungszustand bewegt zuweist, wenn die ermittelten Positionen (12, 12', 12*) unplausibel sind und/oder die ermittelten Positionen (12, 12', 12*) nicht übereinstimmen.

9. Vorrichtung nach Anspruch 8, **dadurch gekennzeichnet, dass** die Kamera (20) fest mit einem Fahrzeug, vorzugsweise mit einem Kraftfahrzeug (18), verbunden ist, wobei die Bewegung (14a bis 14c) der Kamera (20) die auf Grund der Fahrzeugdaten bekannten Bewegung des Fahrzeugs (18) ist.

10. Vorrichtung nach Anspruch 9, **dadurch gekennzeichnet, dass** der Datenverarbeitungseinheit die Informationen über die Bewegung des Fahrzeugs (18) bekannt sind oder von einer weiteren Datenverarbeitungs- und/oder Steuereinheit des Fahrzeugs (18), vorzugsweise über ein Bussystem des Fahrzeugs (18), übertragbar sind, und/oder
dass die Datenverarbeitungseinheit die Bewegung des Fahrzeugs (18) aus den von einem Navigationssystem des Fahrzeugs (18) bereitgestellten Informationen bestimmt.

## Claims

1. Method for determining the state of motion of an object,
in which by means of a camera (20) connected to a vehicle (18) several pictures with images of at least one object (16, 24) are captured sequentially as picture sequence; wherein the camera (20) is a mono camera or an individual camera of a stereo camera system,
for determining the position (12, 12', 12*) of the object (16, 24) respectively one image position of the image of the object (16, 24) is determined at least in some of the pictures; wherein the movement (14a to 14c) of the camera (20) is detected between the respective shooting points in time of the two pictures detected for determining the position (12, 12', 12*) of the object (16, 24) by means of the supplied information,
wherein a first determination of the position (12, 12', 12*) of the object (16, 24) by means of the image positions of the image of the object (16, 24) determined in two pictures and the movement (14a to 14c) of the camera (20) between the points in time of the shooting of the two pictures is performed,
at least a second determination of the position (12, 12') of the object (16, 24) by means of the image positions of the image of the object (16, 24) determined in two further pictures and the movement (14a to 14c) of the camera (20) between the points in time of the shooting of the two further pictures is performed, wherein at least one picture used for determining the position (12, 12', 12*) of the object (16, 24) is different from the pictures used for the second determination of the position (12, 12', 12*) of the object (16, 24),
and wherein it is checked whether the determined first position (12, 12', 12*) and the determined second position (12, 12', 12*) of the object (16, 24) are plausible and identical,
wherein the check whether a determined position is plausible is performed by checking the position of the image of the object in one or several pictures,
wherein the position of the object is not plausible if the determined position of the object does not lie in the coverage range of the camera or the image of the object does not lie at such an image coordinate of the captured picture at which the image should be positioned due to the determined position,
wherein the state of motion is assigned to the object (16) not moving in case the determined positions (12, 12', 12*) are plausible and identical, and
wherein the state of motion is assigned to the object (24) moving in case the determined positions (12, 12', 12*) are not plausible and/or the determined positions (12, 12', 12*) are not identical.

2. Method according to claim 1, **characterized in that** in case plausible positions (12, 12') are determined and in case the determined first and the determined second position (12, 12') of the object the movement (14a to 14c) of the camera (20) is identical with the relative movement between camera (20) and object (16), wherein the object (16) is not moving or stationary, respectively,
and that in case of determined not plausible positions (12, 12', 12*) and/or in case of different determined first and second positions (12, 12', 12*) of the object (24) the movement (14a to 14c) of the camera is not identical with the relative movement between camera (29) and object (24), wherein the object (24) is moved or is not stationary, respectively.

3. Method according to one of the preceding claims, **characterized in that** the movement (14a to 14c) of the camera (20) is determined in space, preferably in a plane.

4. Method according to one of the preceding claims, **characterized in that** the object (16, 24) is assumed to be stationary and **in that** the movement (14a to 14c) of the camera (20) is detected by means of determining the position by a navigation system and/or by means of the detected course of movement of a vehicle (18) that is connected to the camera (20).

5. Method according to claim 4, **characterized in that** it is checked whether the assumption that the object (16, 24) is stationary is verified by determining the position (12, 12') of the object (16, 24), wherein the object (16, 24) is determined as stationary object (16) if the determined positions (12, 12') of the object (16) that are determined by means of at least two performed determinations are plausible and identical, and wherein the object (16, 24) is determined as moving object (24) if the positions (12, 12') of the object (24) determined by means of the at least two performed determinations are not identical and/or are not plausible.

6. Method according to one of the preceding claims, **characterized in that** at least when detecting a part of the image of the image sequence a straight line between the intersect point of the optical axis of the camera (20) with the picture detecting surface and the object (16, 24) is not identical with the optical axis of the camera (20).

7. Method according to claim 6, **characterized in that** when shooting pictures the straight line cuts the optical axis of the camera (20) in one angle in each case.

8. Device for determining the state of motion of an object,
comprising a camera (20) connected to a vehicle (18) for sequentially capturing several pictures with images of at least one object (16, 24) as a sequence of images; wherein the camera (20) is a mono camera or an individual camera of a stereo camera system,
comprising a data processing unit for processing images of pictures taken,
wherein the data processing unit for determining the position (12, 12') of the object (16, 24) respectively determines an image position of the image of the object (16, 24) at least in some of the pictures,
wherein the data processing unit detects the movement (14a to 14c) of the camera (20) between the points in time of shooting of the two captured pictures for determining the position (12, 12') of the object (16, 24) by means of supplied information,
wherein the data processing unit performs a first determination of the position (12, 12') of the object (16, 24) by means of the image position of the image of the object (16, 24) determined in two pictures and the movement (14a to 14c) of the camera (20) between the points in time of shooting of the two pictures,
wherein the data processing unit performs at least a second determination of the position (12, 12') of the object (16, 24) by means of the image positions of the image of the object (16, 24) determined in two further pictures and the movement (14a to 14c) of the camera (20) between the points in time of shooting of the two further pictures, wherein at least one picture used for the first determination of the position (12, 12') of the object (16, 24) differs from the pictures used for the second determination of the position (12, 12') of the object (16, 24),
wherein the data processing unit checks whether the determined first position (12, 12') and the determined second position (12, 12') of the object (16, 24) are plausible and identical,
wherein by checking the position of the image of the object in one or several pictures it is checked whether a determined position is plausible,
wherein the position of the object is not plausible in case the determined position of the object does not lie in the coverage range of the camera, or in case the image of the object does not lie at such an image coordinate of the captured picture at which the image should be positioned due to the determined position,
wherein the data processing unit assigns the state of motion not moving to the object (16) in case the determined positions (12, 12', 12*) are not identical, and
wherein the data processing unit assigns the state of motion moving to the object (24) in case the determined positions (12, 12', 12*) are not plausible and/or the determined positions (12, 12', 12*) are not identical.

9. Device according to claim 8, **characterized in that** the camera (20) is firmly connected to a vehicle, preferably to a motor vehicle (18), wherein the movement (14a to 14c) of the camera (20) is the movement of the vehicle (18) known due to the data of the vehicle.

10. Device according to claim 9, **characterized in that** information with regard to the movement of the vehicle (18) is known to the data processing unit or can be transmitted by means of a further data processing unit and/or control unit of the vehicle (18), preferably via a bus system of the vehicle (18), and/or
that the data processing unit determines the movement of the vehicle (18) on basis of the information provided by the navigation system of the vehicle (18).

## Revendications

1. Procédé de détermination de l'état de mouvement d'un objet,
dans lequel plusieurs images comportant des représentations d'au moins un objet (16, 24) sont capturées successivement sous la forme d'une séquence d'images à l'aide d'une caméra (20) reliée à un véhicule (18) ; la caméra (20) étant une monocaméra ou une caméra individuelle d'un système de caméras stéréo,
pour définir la position (12, 12', 12*) de l'objet (16, 24), une position dans l'image de la représentation de l'objet (16, 24) est à chaque fois déterminée dans au moins une partie des images, le mouvement (14a à 14c) de la caméra (20) entre les instants d'enregistrement à chaque fois de deux images déterminées pour la définition de la position (12, 12', 12*) de l'objet (16, 24) étant capturé à l'aide d'une information amenée,
une première définition de la position (12, 12', 12*) de l'objet (16, 24) est effectuée à l'aide des positions dans l'image, déterminées dans deux images, de la représentation de l'objet (16, 24) et du mouvement (14a à 14c) de la caméra (20) entre les instants d'enregistrement des deux images,
au moins une deuxième définition de la position (12, 12') de l'objet (16, 24) est effectuée à l'aide des positions dans l'image, déterminées dans deux autres images, de la représentation de l'objet (16, 24) et du mouvement (14a à 14c) de la caméra (20) entre les instants d'enregistrement des deux autres images, au moins une image utilisée pour la première définition de la position (12, 12', 12*) de l'objet (16, 24) étant différente des images utilisées pour la deuxième définition de la position (12, 12', 12*) de l'objet (16, 24),
et dans lequel on vérifie si la première position déterminée (12, 12', 12*) et la deuxième position déterminée (12, 12', 12*) de l'objet (16, 24) sont plausibles et coïncident,
la vérification pour savoir si une position déterminée est plausible, étant effectuée par une vérification de la position de la représentation de l'objet dans une ou plusieurs images,
la position de l'objet étant peu plausible si la position déterminée de l'objet n'est pas dans le domaine de capture de la caméra ou la représentation de l'objet ne se trouve pas à une coordonnée dans l'image capturée où la représentation devrait se trouver en se fondant sur la position déterminée,
l'état de mouvement 'non déplacé' étant affecté à l'objet (16) si les positions déterminées (12, 12', 12*) sont plausibles et coïncident, et
l'état de mouvement 'déplacé' étant affecté à l'objet (24) si les positions déterminées (12, 12', 12*) sont peu plausibles et/ou si les positions déterminées (12, 12', 12*) ne coïncident pas.

2. Procédé selon la revendication 1, **caractérisé en ce que**, lorsque les positions déterminées (12, 12') sont plausibles et qu'il y a une coïncidence des première et deuxième positions déterminées (12, 12') de l'objet, le mouvement (14a à 14c) de la caméra (20) coïncide avec le mouvement relatif entre la caméra (20) et l'objet (16), l'objet (16) étant non déplacé et/ou immobile,
et **en ce que**, lorsque les positions déterminées (12, 12', 12*) sont peu plausibles et/ou lorsque les première et deuxième positions déterminées (12, 12', 12*) de l'objet (24) sont différentes, le mouvement (14a à 14c) de la caméra (20) ne coïncide pas avec le mouvement relatif entre la caméra (20) et l'objet (24), l'objet (24) étant déplacé et/ou n'étant pas immobile.

3. Procédé selon l'une des revendications précédentes, **caractérisé en ce que** le mouvement (14a à 14c) de la caméra (20) est déterminé dans l'espace, de préférence dans un plan.

4. Procédé selon l'une des revendications précédentes, **caractérisé en ce que** l'objet (16, 24) est considéré comme immobile, et **en ce que** le mouvement (14a à 14c) de la caméra (20) est capturé à l'aide d'une localisation par un système de navigation et/ou par l'allure du mouvement capturé d'un véhicule (18) auquel la caméra (20) est reliée.

5. Procédé selon la revendication 4, **caractérisé en ce qu'**on vérifie, si l'hypothèse selon laquelle l'objet (16, 24) est immobile, est vérifiée par une localisation de la position (12, 12') de l'objet (16, 24), l'objet (16, 24) étant défini comme objet immobile (16) si les positions (12, 12') de l'objet (16), déterminées à l'aide des au moins deux définitions effectuées, sont plausibles et coïncident, et l'objet (16, 24) étant défini comme objet déplacé (24) si les positions (12, 12') de l'objet (24), déterminées à l'aide des au moins deux définitions effectuées, ne coïncident pas et/ou sont peu plausibles.

6. Procédé selon l'une des revendications précédentes, **caractérisé en ce que**, au moins lorsque l'on capture une partie des images de la séquence d'images, une droite entre le point d'intersection de l'axe optique de la caméra (20) avec la surface d'enregistrement et l'objet (16, 24) ne coïncide pas avec l'axe optique de la caméra (20).

7. Procédé selon la revendication 6, **caractérisé en ce que** la droite coupe l'axe optique de la caméra (20) lors de la capture des images respectivement en formant un angle.

8. Dispositif de détermination de l'état de mouvement d'un objet, ledit dispositif comportant
une caméra (20), reliée à un véhicule (18), pour la capture de plusieurs images comportant des représentations d'au moins un objet (16, 24) successivement sous la forme d'une séquence d'images ; la caméra (20) étant une monocaméra ou une caméra individuelle d'un système de caméras stéréo,
une unité de traitement de données pour le traitement d'images enregistrées,
l'unité de traitement de données déterminant à chaque fois une position de représentation de l'objet (16, 24) dans au moins une partie des images pour la définition de la position (12, 12') de l'objet (16, 24),
l'unité de traitement de données capturant le mouvement (14a à 14c) de la caméra (20) entre les instants d'enregistrement à chaque fois de deux images capturées pour la définition de la position (12, 12') de l'objet (16, 24) à l'aide d'informations amenées,
l'unité de traitement de données effectuant une première définition de la position (12, 12') de l'objet (16, 24) à l'aide des positions dans l'image, déterminées dans deux images (16, 24), de la représentation de l'objet et du mouvement (14a à 14c) de la caméra (20) entre les instants d'enregistrement des deux images,
l'unité de traitement de données effectuant au moins une deuxième définition de la position (12, 12') de l'objet (16, 24) à l'aide des positions dans l'image, déterminées dans deux autres images, de l'objet (16, 24) et du mouvement (14a à 14c) de la caméra (20) entre les instants d'enregistrement des deux autres images, au moins une image utilisée pour la première définition de la position (12, 12') de l'objet (16, 24) étant différente des images utilisées pour la deuxième définition de la position (12, 12') de l'objet (16, 24),
l'unité de traitement de données vérifiant si la première position déterminée (12, 12') et la deuxième position déterminée (12, 12') de l'objet (16, 24) sont plausibles et coïncident,
la vérification pour savoir si une position déterminée est plausible étant effectuée par une vérification de la position de la représentation de l'objet dans une ou plusieurs images,
la position de l'objet étant peu plausible si la position déterminée de l'objet n'est pas dans le domaine de capture de la caméra ou la représentation de l'objet ne se trouve pas à une coordonnée dans l'image capturée où la représentation devrait se trouver en se fondant sur la position déterminée,
l'unité de traitement de données affectant à l'objet (16) l'état de mouvement 'non déplacé' si les positions déterminées (12, 12', 12*) ne coïncident pas, et
l'unité de traitement de données affectant à l'objet (24) l'état de mouvement 'déplacé' si les positions déterminées (12, 12', 12*) sont peu plausibles et/ou si les positions déterminées (12, 12', 12*) ne coïncident pas.

9. Dispositif selon la revendication 8, **caractérisé en ce que** la caméra (20) est reliée solidement à un véhicule, de préférence une automobile (18), le mouvement (14a à 14c) de la caméra (20) étant le mouvement du véhicule (18) connu à partir des données du véhicule.

10. Dispositif selon la revendication 9, **caractérisé en ce que** les informations sur le mouvement du véhicule (18) sont connues de l'unité de traitement de données ou peuvent être transmises par une autre unité de traitement de données et/ou de commande du véhicule (18), de préférence via un système de bus du véhicule (18), et/ou
**en ce que** l'unité de traitement de données définit le mouvement du véhicule (18) à partir des informations fournies par un système de navigation du véhicule (18).
